# EUROPÄISCHE PATENTANMELDUNG

(11) **EP 4 186 853 A1**
(43) Veröffentlichungstag der Anmeldung: **31.05.2023**
(21) Anmeldenummer: 21020596.9
(22) Anmeldetag: 26.11.2021
(51) Int. Cl.: C01B 3/04, C01C 1/04, C25B 1/04, F25J 3/04

(54) **VERFAHREN UND VORRICHTUNG ZUR ERZEUGUNG VON AMMONIAK**

(71) Anmelder: Linde GmbH, 82049 Pullach (DE)
(72) Erfinder: Schwarzhuber, Josef, 82049 Pullach (DE); Heinzel, Albrecht, 82049 Pullach (DE); Reinke, Michael, 82049 Pullach (DE)
(74) Vertreter: Fischer, Werner

(57) **Zusammenfassung**

Die Erfindung betrifft ein Verfahren sowie eine Vorrichtung zur Erzeugung von Ammoniak (13), bei dem eine erste Wasserstoff/Stickstoff-Fraktion (6) mit zeitlich veränderlichem Mengenstrom bereitgestellt wird, um ein Ammoniaksynthesegas (8) zu bilden, das in einer Ammoniaksynthese (A) zu Ammoniak umgesetzt wird, wobei die erste Wasserstoff/Stickstoff-Fraktion (6) durch eine zweite Wasserstoff/Stickstoff-Fraktion (14) so ergänzt wird, dass das Ammoniaksynthesegas (8) der Ammoniaksynthese (A) im Normalbetreib stets mit einem Mengenstrom zugeführt werden kann, der einen vorgegebenen Mindestwert übersteigt. Kennzeichnen hierbei ist, dass in der Ammoniaksynthese (A) produziertes Ammoniak (10) in flüssiger Form in einen Speicher (Z) überführt wird, aus dem Ammoniak (15) entnommen und in Wasserstoff und Stickstoff gespalten wird, um Wasserstoff und Stickstoff zur Bildung der zweiten Wasserstoff/Stickstoff-Fraktion (14) zu erhalten.

## Beschreibung

Die Erfindung betrifft ein Verfahren zur Erzeugung von Ammoniak, bei dem eine erste Wasserstoff/Stickstoff-Fraktion mit zeitlich veränderlichem Mengenstrom bereitgestellt wird, um ein Ammoniaksynthesegas zu bilden, das in einer Ammoniaksynthese zu Ammoniak umgesetzt wird, wobei die erste Wasserstoff/Stickstoff-Fraktion durch eine zweite Wasserstoff/Stickstoff-Fraktion so ergänzt wird, dass das Ammoniaksynthesegas der Ammoniaksynthese im Normalbetrieb stets mit einem Mengenstrom zugeführt werden kann, der einen vorgegebenen Mindestwert übersteigt.

Weiterhin betrifft die Erfindung eine Vorrichtung zur Durchführung des erfindungsgemäßen Verfahrens.

Unter dem Normalbetrieb ist ein Modus zu verstehen, in dem die Ammoniaksynthese Ammoniak definierter Qualität in einer Menge liefert, die zwar zwischen einem Minimal- und einem Maximalwert variieren kann, jedoch stets von Null verschieden ist. Das An- und Abfahren sowie der Stillstand der Ammoniaksynthese gehört nicht zum Normalbetrieb.

Ammoniak ist eine der weltweit meistproduzierten Chemikalien. Es dient in erster Linie als Grundstoff zur Herstellung von Düngemitteln, gewinnt daneben aber auch zunehmend als Energieträger und Wasserstoffspeicher an Bedeutung. In industriellem Maßstab wird es beinahe ausschließlich nach dem Haber-Bosch-Verfahren aus Stickstoff, der kryogen oder adsorptiv aus Luft abgetrennt wird, und Wasserstoff synthetisiert. Je nachdem, ob Wasserstoff und Stickstoff, wie heute noch weitgehend üblich, unter Freisetzung großer Mengen klimaschädlichen Kohlendioxids oder weitgehend kohlendioxidfrei gewonnen werden, spricht man von "Grauem Ammoniak" bzw. "Grünem Ammoniak".

Beim Haber-Bosch-Verfahren wird ein vorwiegend aus Wasserstoff und Stickstoff bestehendes Ammoniaksynthesegas, in dem die beiden Stoffe in dem für die Synthese von Ammoniak stöchiometrischen Verhältnis von 3:1 vorliegen, mit einem Druck zwischen 100 und 200bar(a) einer Ammoniaksynthese zugeführt, um mit katalytischer Unterstützung in einem Ammoniakreaktor exotherm zu Ammoniak umgesetzt zu werden. Aufgrund thermodynamischer Limitierungen erfolgt die Umsetzung allerdings nur unvollständig, so dass ein Gasgemisch entsteht, das neben Ammoniak auch erhebliche Wasserstoff- und Stickstoffanteile enthält. Mit einer Temperatur zwischen 400 und 450°C verlässt dieses Gasgemisch den Ammoniakreaktor und wird nachfolgend in einer Reihe von Wärmetauschern abgekühlt, um Ammoniak durch Kondensation abzuscheiden und ein weitgehend aus Wasserstoff und Stickstoff bestehendes, Reste nicht abgeschiedenen Ammoniaks enthaltendes Recyclegas zu erhalten, das zur Erhöhung der Ammoniakausbeute zurückgeführt und bei der Bildung des Ammoniaksynthesegases verwendet wird.

Zur Erzeugung von "Grünem Ammoniak" wird Wasserstoff weitgehend kohlendioxidfrei, beispielsweise durch Zerlegung von Wasser unter Verwendung eines Elektrolyseurs gewonnen und mit ebenfalls weitgehend kohlendioxidfrei erzeugtem Stickstoff zu einer ersten Wasserstoff/Stickstoff-Fraktion gemischt, die mit einem definierten Wasserstoff/Stickstoff-Verhältnis zur Bildung des Ammoniaksynthesegases eingesetzt wird. Die elektrische Leistung für Elektrolyse und Stickstofferzeugung wird direkt aus regenerativen Quellen, wie Wind- oder Solarkraftwerken, oder als Überschussleistung aus dem öffentlichen Netz bezogen, weshalb sie nicht konstant zur Verfügung steht. Da sich der Betrieb des Elektrolyseurs relativ einfach und schnell an diese Bedingungen anpassen lässt und die Wasserstoffproduktion in erster Näherung proportional zur zugeführten elektrischen Leistung ist, schwanken sowohl der Mengenstrom des im Elektrolyseur produzierten Wasserstoffs wie auch der Mengenstrom der ersten Wasserstoff/Stickstoff-Fraktion mit der Höhe der verfügbaren elektrischen Leistung.

Im Vergleich zum Elektrolyseur und der zur Stickstoffgewinnung eingesetzten Vorrichtung, bei der es sich beispielsweise um einen kryogenen Luftzerleger handelt, kann die Ammoniaksynthese nur deutlich langsamer und in engeren Grenzen an schwankende Betriebsbedingungen angepasst werden. Unterschreitet die zuführbare Menge an Ammoniaksynthesegas einen Mindestwert, muss der Normalbetrieb unterbrochen und die Ammoniaksynthese abgeschaltet werden. Um dies zu vermeiden, wird nach dem Stand der Technik in Zeiten, in denen ausreichend elektrische Leistung zur Verfügung steht, mehr Wasserstoff und Stickstoff produziert, als in der Ammoniaksynthese eingesetzt werden kann. Die überschüssig erzeugten Stoffe werden gespeichert und in Zeiten mangelnder elektrischer Leistung zur Bildung einer zweiten Wasserstoff/Stickstoff-Fraktion eingesetzt, die die erste Wasserstoff/Stickstoff-Fraktion so ergänzt, dass das Ammoniaksynthesegas mit einem oberhalb des Mindestwertes liegenden Mengenstrom gebildet und der Ammoniaksynthese zugeführt werden kann.

Wasserstoff und Stickstoff werden jeder für sich allein oder gemeinsam gasförmig oder adsorptiv oder absorptiv an geeignete Stoffe gebunden oder in flüssiger Form als Reinstoffe tiefkalt gespeichert. In jedem Fall ist die Speicherung kostenintensiv, da die erforderlichen Speicher sehr groß und/oder druckfest oder wärmeisoliert ausgeführt sein müssen und darüber hinaus Aufwendungen für Apparate und Betriebsmittel zur Verdichtung bzw. Abkühlung der Stoffe in erheblichem Umfang anfallen. Zudem besteht die Gefahr, dass die gespeicherten Stoffmengen zur Überbrückung eines länger andauernden Mangels an elektrischer Leistung nicht ausreichen und die Ammoniaksynthese trotz allem abgeschaltet werden muss.

Außerplanmäßiges Ab- und Anfahren der Ammoniaksynthese sollte jedoch möglichst vermieden werden, da die damit verbundenen Druck- und Temperaturwechsel den Ammoniakreaktor, aber auch Hilfsapparate wie Synthesegas- und Kältemittelverdichter mechanisch stark beanspruchen. Der eingesetzte Katalysator kann zerfallen, wodurch seine Aktivität abnimmt, der Druckverlust über das Katalysatorbett ansteigt und die im Ammoniakreaktor eingesetzten Gase fehlverteilt werden. Darüber hinaus kann während des bis zu zwei Tage dauernden Wiederanfahrens der Ammoniaksynthese kein Ammoniak zur Abgabe als Produkt erzeugt werden, auch wenn Wasserstoff und Stickstoff in dieser Zeit bereits in ausreichenden Mengen zur Verfügung stehen.

Aufgabe der vorliegenden Erfindung ist es daher, ein Verfahren sowie eine Vorrichtung der gattungsgemäßen Art anzugeben, mit denen die Nachteile des Standes der Technik überwunden werden.

Die gestellte Aufgabe wird verfahrensseitig erfindungsgemäß dadurch gelöst, dass in der Ammoniaksynthese produziertes Ammoniak in flüssiger Form in einen Speicher überführt wird, aus dem Ammoniak entnommen und in Wasserstoff und Stickstoff gespalten wird, um Wasserstoff und Stickstoff zur Bildung der zweiten Wasserstoff/Stickstoff-Fraktion zu erhalten.

Flüssiges Ammoniak kann bei moderaten Drücken und Temperaturen auf vergleichsweise kleinem Raum kostengünstig gespeichert werden. In Ammoniakanlagen sind in der Regel Ammoniakspeicher vorhanden, in denen das als Produkt abgebbare Ammoniak vor seiner weiteren Verwendung - beispielsweise als Energieträger - auf diese Weise zwischengespeichert wird. Einem solchen Ammoniakspeicher kann auch das Ammoniak entnommen werden, das zur erfindungsgemäßen Bildung der zweiten Wasserstoff/Stickstoff-Fraktion eingesetzt wird.

Möglich ist aber auch die Verwendung eines separaten Pufferspeichers, der allein das für die erfindungsgemäße Bildung der zweiten Wasserstoff/Stickstoff-Fraktion bestimmte Ammoniak aufnimmt. Sinnvollerweise wird das Ammoniak bei Atmosphärendruck und Temperaturen um -33°C (± 5°C) oder bei höheren Temperaturen und Drücken oberhalb des Atmosphärendrucks gespeichert.

Vorzugsweise wird nur dann Ammoniak in den Pufferspeicher eingeleitet, wenn die erste Wasserstoff/Stickstoff-Fraktion mit einem Mengenstrom zur Verfügung steht, der groß genug ist, um Ammoniaksynthesegas mit einem den Mindestwert übersteigenden Mengenstrom zu bilden und eine zweiten Wasserstoff/Stickstoff-Fraktion nicht erforderlich ist. Durch das erfindungsgemäße Verfahren kann aber auch ein kontinuierlicher Wasserstoff/Stickstoff-Kreislauf eigerichtet werden, wobei flüssiges Ammoniak in den Pufferspeicher eingeleitet und gleichzeitig Ammoniak zur Bildung der zweiten Wasserstoff/Stickstoff-Fraktion aus dem Pufferspeicher entnommen wird.

Unter der Voraussetzung, dass im Pufferspeicher vor Einrichtung des kontinuierlichen Wasserstoff/Stickstoff-Kreislaufs genügend Ammoniak gespeichert ist, um den Wasserstoff/Stickstoff-Kreislauf mit einer Stärke zu etablieren, die ausreicht, der Ammoniaksynthese Ammoniaksynthesegas mit einem den Mindestwert übersteigenden Mengenstrom zuzuführen, ist es theoretisch möglich, den Normalbetrieb der Ammoniaksynthese unabhängig von der Größe der ersten Wasserstoff/Stickstoff-Fraktion beliebig lange aufrechtzuerhalten. In der Praxis treten zwar im Wasserstoff/Stickstoff-Kreislauf unvermeidlich Verluste auf, die die Aufrechterhaltung des Normalbetriebs auf endliche Zeiten beschränken. Im Vergleich zum Stand der Technik sind diese Zeiten bei gleichen gespeicherten Wasserstoffmengen jedoch wesentlich länger.

Zur Bildung der zweiten Wasserstoff/Stickstoff-Fraktion wird das dem Speicher entnommene Ammoniak einem Spaltreaktor zugeführt, wo es mit oder ohne katalytischer Unterstützung in einer endothermen Reaktion zu einem Spaltgas umgesetzt wird. Die Lage des Gleichgewichts und die Geschwindigkeit der dabei ablaufenden Reaktion

2NH₃ ↔ N₂ + 3H₂

hängen stark von Druck und Temperatur sowie der Art des ggf. eingesetzten Katalysators ab.

Behälter, wie sie zur Zwischenspeicherung von Ammoniak in Ammoniakanlagen eingesetzt werden, sind gewöhnlich aus korrosionsanfälligem Kohlenstoffstahl gefertigt, weshalb das zu speichernde Ammoniak zur Unterdrückung der Korrosionsmechanismen mit einer geringen Menge Wassers versetzt wird. Um zu verhindern, dass dieses Wasser, das im Spaltreaktor nicht umgesetzt wird, über das Ammoniaksynthesegas in den Ammoniakreaktor gelangt, wo es ein Gift für den dort eingesetzten Katalysator darstellt, wird vorgeschlagen, das im Spaltreaktor erhaltene Spaltgas zur Bildung der zweiten Wasserstoff/Stickstoff-Fraktion über eine Trocknerstation zu führen, um das enthaltene Wasser abzutrennen. Die Entfernung von nicht umgesetztem Ammoniak aus dem Spaltgas kann unterbleiben, da Ammoniak, das ohnehin über das Recyclegas in das Ammoniaksynthesegas gelangt, im Ammoniakreaktor kein Katalysatorgift darstellt. Außerdem liegt Ammoniak im Spaltgas gewöhnlich in derart geringer Konzentration vor, dass es den Umsatz der Ammoniaksynthese nur unwesentlich thermodynamisch limitiert.

In einer besonders bevorzugten Ausgestaltung der Erfindung ist vorgesehen, Wasserstoff für die Bildung der ersten Wasserstoff/Stickstoff-Fraktion mit Hilfe eines Elektrolyseurs durch die Spaltung von Wasser zu gewinnen, wobei ein sauerstoffsowie ein wasserstoffreicher Stoffstrom entstehen. Unabhängig von der Art des eingesetzten Elektrolyseurs enthält der wasserstoffreiche Stoffstrom stets einen geringen Wasseranteil, der in einer dem Elektrolyseur nachgeschalteten Trocknerstation entfernt werden muss, um die Vergiftung des im Ammoniakreaktor eingesetzten Katalysators zu vermeiden. Zweckmäßigerweise wird diese Trocknerstation auch zur Entfernung von Wasser aus dem im Spaltreaktor erhaltenen Spaltgas genutzt.

Wenn das für die erfindungsgemäße Bildung der zweiten Wasserstoff/Stickstoff-Fraktion bestimmte Ammoniak in einem separaten Pufferspeicher gespeichert wird, kann dieser im Verhältnis zu einem Ammoniak-Zwischenspeicher kleine Tank aus einem gegenüber Ammoniak korrosionsbeständigerem Material ausgeführt werden, ohne die Anlagenkosten wesentlich zu erhöhen. Es wird daher vorgeschlagen, das Ammoniak wasserfrei in einem solchen Pufferspeicher zu speichern, so dass im Spaltreaktor ein wasserfreies Spaltgas entsteht, das ohne Trocknung unmittelbar zur Bildung des Ammoniaksynthesegases eingesetzt wird.

Sinnvollerweise wird die Ammoniakspaltung bei einem Druck durchgeführt, der es erlaubt, das Spaltgas ohne Verdichtung so zur zweiten Wasserstoff/Stickstoff-Fraktion aufzubereiten, dass diese mit einem Druck vorliegt, der höher ist als der Ansaugdruck eines Verdichters, mit dem das Ammoniaksynthesegases auf den Eingangsdruck der Ammoniaksynthese gebracht wird. Bevorzugt wird die Ammoniakspaltung bei Drücken zwischen 10 und 40bar(a) durchgeführt. Dies ist umso einfacher möglich, als der Druck des flüssig vorliegenden Ammoniaks mit geringem Energieaufwand erhöht werden kann. Damit unter diesen Bedingungen ein ausreichend hoher, wirtschaftlich sinnvoller Umsetzungsgrad des eingesetzten Ammoniaks erreicht wird, ist es notwendig, die Spaltung bei Temperaturen zwischen 500 und 1000°C zu betreiben.

Zum Erhalt der zweiten Wasserstoff/Stickstoff-Fraktion ist es erforderlich, das heiß aus dem Spaltreaktor strömende Spaltgas abzukühlen. Hierzu kann das Spaltgas beispielsweise zur Vorwärmung des dem Spaltreaktor zugeführten Ammoniaks und/oder zur Erzeugung von Dampf genutzt werden, der etwa einen Dampfstrom ergänzt, der bei der Abkühlung des in der Ammoniaksynthese erhaltenen Gasgemisches anfällt und der sinnvollerweise über eine Dampfturbine entspannt wird, um einen Verdichter oder einen Stromgenerator anzutreiben.

Neben Ammoniak, Wasserstoff und Stickstoff enthält das in der Ammoniaksynthese erhaltene Gasgemisch auch Inertgase wie Argon und Helium, die aus dem Prozess kontinuierlich oder diskontinuierlich in einem Purgegasstrom ausgeschleust werden müssen. Ein derartiger Purgegasstrom umfasst prozessbedingt auch brennbare Stoffe wie Ammoniak und Wasserstoff, weshalb er bei der konventionellen Ammoniakerzeugung beispielsweise in einem zur Wasserstoffproduktion eingesetzten Dampfreformer unterfeuert wird. Da eine solche Verwertungsmöglichkeit bei dem erfindungsgemäßen Verfahren nicht besteht, wird vorgeschlagen, im Prozess anfallendes Purgegas im Spaltreaktor zu unterfeuern oder durch Verbrennung in einer Fackel zu entsorgen.

Weiterhin betrifft die Erfindung eine Vorrichtung zur Erzeugung von Ammoniak, mit einer ersten Wasserstoff/Stickstoff-Quelle, die eine erste Wasserstoff/Stickstoff-Fraktion zur Bildung eines Ammoniaksynthesegases mit zeitlich veränderlichem Mengenstrom bereitstellt, einer Ammoniaksynthese, dem das gebildete Ammoniaksynthesegas zur Umsetzung zu Ammoniak zuführbar ist, sowie einer zweiten Wasserstoff/Stickstoff-Quelle, die eine zweite Wasserstoff/Stickstoff-Fraktion bereitstellen kann, um die erste Wasserstoff/Stickstoff-Fraktion so zu ergänzen, dass das Ammoniaksynthesegas der Ammoniaksynthese im Normalbetreib stets mit einem Mengenstrom zuführbar ist, der einen vorgegebenen Mindestwert übersteigt.

Vorrichtungsseitig wird die gestellte Aufgabe erfindungsgemäß dadurch gelöst, dass sie einen mit der zweiten Wasserstoff/Stickstoff-Quelle verbundenen Speicher umfasst, in den in der Ammoniaksynthese produziertes Ammoniak in flüssiger Form überführbar ist, und aus dem Ammoniak der zweiten Wasserstoff/Stickstoff-Quelle zugeführt werden kann, um Wasserstoff und Stickstoff zur Bildung der zweiten Wasserstoff/Stickstoff-Fraktion durch die Spaltung von Ammoniak zu erhalten.

Bei dem mit der zweiten Wasserstoff/Stickstoff-Quelle verbundenen Speicher kann es sich um einen Ammoniakspeicher handeln, in dem als Produkt abgebbares Ammoniak vor seiner weiteren Verwendung zwischengespeichert werden kann. Möglich ist aber auch, den Speicher als separaten Pufferspeicher auszuführen, der allein das für die erfindungsgemäße Bildung der zweiten Wasserstoff/Stickstoff-Fraktion bestimmte Ammoniak aufnimmt.

Sinnvollerweise ist der mit der zweiten Wasserstoff/Stickstoff-Quelle verbundene Speicher so ausgeführt, dass das flüssige Ammoniak bei Atmosphärendruck und Temperaturen um -33°C (± 5°C) oder bei höheren Temperaturen und Drücken oberhalb des Atmosphärendrucks gespeichert werden kann. Vorzugsweise ist der Speicher zumindest dann, wenn er als separater Pufferspeicher ausgeführt ist, aus einem gegenüber Ammoniak korrosionsbeständigen Material gefertigt.

Die erste Wasserstoff/Stickstoff-Quelle kann beispielsweise einen Elektrolyseur umfassen, in dem Wasser insbesondere durch Protonen-Austausch-Membran-, Alkali- oder Festoxid-Elektrolyse gespalten und eine wasserhaltige Wasserstofffraktion erhalten werden kann. Zur Entfernung des im Ammoniaksynthesegas störenden Wassers ist dem Elektrolyseur eine Trocknerstation zugeordnet, in der aus der wasserhaltigen ein weitgehend wasserfreie Wasserstofffraktion zur Bildung der ersten Wasserstoff/Stickstoff-Fraktion erzeugbar ist.

Vorzugsweise umfasst die zweite Wasserstoff/Stickstoff-Quelle einen Spaltreaktor, der einen ähnlichen Aufbau wie ein aus dem Stand der Technik zur Synthesegaserzeugung durch Dampfreformierung von Kohlenwasserstoffen bekannter Reaktor besitzt. Ein derartiger Spaltreaktor umfasst einen Spaltofen, der mit Katalysatormaterial gefüllte Spaltrohre aufweist. Die Spaltrohre sind in einem Feuerraum angeordnet, der durch einen oder mehrere Brenner beheizt wird, die Energie für die endotherm ablaufende Spaltung des durch die Spaltrohre geführten Ammoniaks liefern. Die von den Brennern erzeugten Rauchgase können hierbei nur einen kleinen Teil ihrer fühlbaren Wärme an die Spaltrohre abgeben, so dass sie den Feuerraum mit hoher Temperatur und einem großen Inhalt an Restwärme verlassen. Um die Ammoniakspaltung effizient durchführen zu können wird vorgeschlagen, dass der Spaltreaktor mit einem Abhitzesystem ausgeführt ist, in dem zumindest ein Wärmetauscher angeordnet ist, über den den heißen Rauchgasen Wärme zur Vorwärmung eines Einsatzstoffes, wie Ammoniak oder Brennerluft, oder zur Dampferzeugung entzogen werden kann.

Möglich ist es auch, den Spaltofen elektrisch beheizbar auszuführen.

Unabhängig von der Beheizungsart des Spaltreaktors umfasst die zweite Wasserstoff/Stickstoff-Quelle sinnvollerweise zumindest einen Wärmetauscher über den dem heiß aus dem Spaltreaktor strömenden Spaltgas Wärme zur Vorwärmung eines Einsatzstoffes, wie Ammoniak oder Brennerluft, oder zur Dampferzeugung entzogen werden kann.

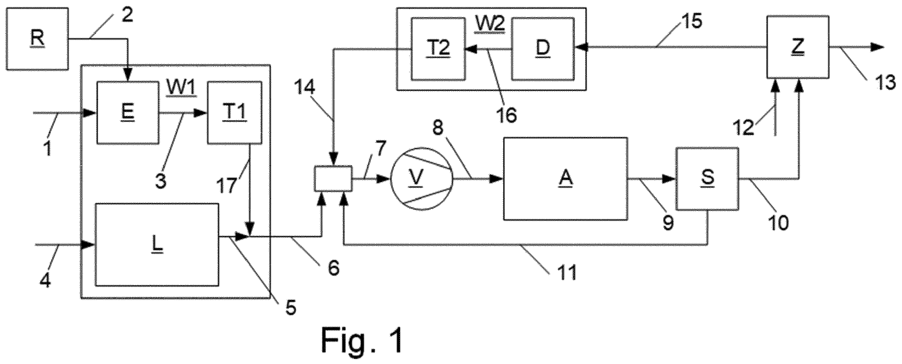

Im Folgenden wird die Erfindung anhand eines in der **Figur 1** schematisch dargestellten Ausführungsbeispiels näher erläutert.

Die Figur 1 zeigt eine Anlage zur Ammoniakerzeugung, die in einer bevorzugten Ausgestaltung des erfindungsgemäßen Verfahrens betrieben werden kann.

Über Leitung 1 wird dem in der ersten Wasserstoff/Stickstoff-Quelle W1 angeordneten Elektrolyseur E Wasser zugeführt, um es elektrochemisch in Wasserstoff und Sauerstoff zu spalten. Die für die Wasserspaltung benötigte Energie wird über elektrischen Strom 2 mit zeitlich schwankender Leistung aus der Energiequelle R zugeführt, bei der es sich beispielsweise um ein Wind- oder ein Solarkraftwerk handelt. Neben einer Sauerstofffraktion (nicht dargestellt), kann aus dem Elektrolyseur E mit ebenfalls schwankendem Mengenstrom eine wasserhaltige Wasserstofffraktion 3 abgezogen werden, die zur Abtrennung des bei der Ammoniaksynthese störenden Wassers in die zur ersten Wasserstoff/Stickstoff-Quelle W1 gehörende erste Trocknerstation T1 geführt wird. In dem ebenfalls zur ersten Wasserstoff/Stickstoff-Quelle W1 gehörenden Luftzerleger L wird aus Luft 4 der Stickstoffstrom 5 gewonnen, der mit der in der ersten Trocknerstation T1 weitgehend wasserfrei erhaltenen Wasserstofffraktion 17 zur ersten Wasserstoff/Stickstoff-Fraktion 6 vereinigt und zur Bildung von Ammoniaksynthesegas 7 verwendet wird, in dem Wasserstoff und Stickstoff in dem für die Ammoniaksynthese stöchiometrischen Verhältnis von 3:1 vorliegen. Nach einer Verdichtung im Kompressor V wird das Ammoniaksynthesegas über Leitung 8 mit einem Druck zwischen 100 und 200bar(a) der Ammoniaksynthese A zugeführt, wo es mit katalytischer Unterstützung in einer exothermen Reaktion zu einem Gasgemisch 9 umgesetzt wird, das neben Ammoniak auch erhebliche Wasserstoff- und Stickstoffanteile aufweist. Mit einer Temperatur zwischen 400 und 450°C verlässt das Gasgemisch 9 die Ammoniaksyntheser A und wird nachfolgend in der Trenneinrichtung S abgekühlt, um Ammoniak 10 durch Kondensation abzuscheiden und ein weitgehend aus Wasserstoff und Stickstoff bestehendes Recyclegas 11 zu erhalten, das zur Erhöhung der Ammoniakausbeute zurückgeführt und bei der Bildung des Ammoniaksynthesegases 7 verwendet wird. Gemeinsam mit einer kleinen Menge Wassers 12 wird das auskondensierte Ammoniak 10 in den Zwischenspeicher Z eingeleitet, aus dem ein Ammoniakprodukt 13 abgezogen werden kann.

Wenn die aus der Energiequelle R zuführbare elektrische Leistung nicht dazu ausreicht, in der ersten Wasserstoff/Stickstoff-Quelle W1 genügend Wasserstoff zu erzeugen, um Ammoniaksynthesegas 8 bilden und der Ammoniaksynthese A mit einem Mengenstrom zuführen zu können, der einen für die Aufrechterhaltung seines Reaktor-Normalbetriebs erforderlichen Mindestwert übersteigt, wird die erste Wasserstoff/Stickstoff-Fraktion 6 durch eine zweite Wasserstoff/Stickstoff-Fraktion 14 so ergänzt, dass der Mengenstrom des Ammoniaksynthesegases 8 größer als dieser Mindestwert ist. Erzeugt wird die zweite Wasserstoff/Stickstoff-Fraktion 14 aus einer Ammoniakfraktion 15, die dem Zwischenspeicher Z entnommen und dem in der zweiten Wasserstoff/Stickstoff-Quelle W2 angeordneten Spaltreaktor D zugeführt wird. Das in der Ammoniakfraktion 15 enthalten Ammoniak wird hier in einer endothermen, vorzugsweise katalytisch unterstützen Reaktion in Wasserstoff und Stickstoff gespalten, während Wasser, das die Ammoniakfraktion 15 ebenfalls umfasst, den Spaltreaktor D unverändert durchläuft. Das so erhaltene Spaltgas 16, in dem Wasserstoff und Stickstoff in dem für die Ammoniaksynthese stöchiometrischen Verhältnis von 3:1 vorliegen und das daneben nicht umgesetztes Ammoniak sowie Wasser enthält, wird zur Abtrennung des in der Ammoniaksynthese störenden Wassers der zur zweiten Wasserstoff/Stickstoff-Quelle W2 gehörenden zweiten Trocknerstation T2 zugeführt, wo die zweite Wasserstoff/Stickstoff-Fraktion 14 entsteht.

## Patentansprüche

1. Verfahren zur Erzeugung von Ammoniak (13), bei dem eine erste Wasserstoff/Stickstoff-Fraktion (6) mit zeitlich veränderlichem Mengenstrom bereitgestellt wird, um ein Ammoniaksynthesegas (8) zu bilden, das in einer Ammoniaksynthese (A) zu Ammoniak umgesetzt wird, wobei die erste Wasserstoff/Stickstoff-Fraktion (6) durch eine zweite Wasserstoff/Stickstoff-Fraktion (14) so ergänzt wird, dass das Ammoniaksynthesegas (8) der Ammoniaksynthese (A) im Normalbetreib stets mit einem Mengenstrom zugeführt werden kann, der einen vorgegebenen Mindestwert übersteigt, **dadurch gekennzeichnet, dass** in der Ammoniaksynthese (A) produziertes Ammoniak (10) in flüssiger Form in einen Speicher (Z) überführt wird, aus dem Ammoniak (15) entnommen und in Wasserstoff und Stickstoff gespalten wird, um Wasserstoff und Stickstoff zur Bildung der zweiten Wasserstoff/Stickstoff-Fraktion (14) zu erhalten.

2. Verfahren nach Anspruch 1, **dadurch gekennzeichnet, dass** das für die Bildung der zweiten Wasserstoff/Stickstoff-Fraktion (14) bestimmte Ammoniak (15) drucklos bei Temperaturen unter -33°C oder bei höheren Temperaturen und unter Druck gespeichert wird.

3. Verfahren nach einem der Ansprüche 1 oder 2, **dadurch gekennzeichnet, dass** das für die Bildung der zweiten Wasserstoff/Stickstoff-Fraktion (14) bestimmte Ammoniak (15) einem Ammoniakspeicher (Z) entnommen wird, in dem als Produkt abgebbares Ammoniak vor seiner weiteren Verwendung zwischengespeichert wird.

4. Verfahren nach einem der Ansprüche 1 oder 2, **dadurch gekennzeichnet, dass** das für die Bildung der zweiten Wasserstoff/Stickstoff-Fraktion (14) bestimmte Ammoniak (15) unabhängig von als Produkt abgebbarem Ammoniak in einem separaten Pufferspeicher zwischengespeichert wird.

5. Verfahren nach einem der Ansprüche 1 bis 4, **dadurch gekennzeichnet, dass** das dem Speicher (Z) entnommene Ammoniak (15) in einem Spaltreaktor (D) mit oder ohne katalytischer Unterstützung in einer endothermen Reaktion zu einem Wasserstoff und Stickstoff enthaltenden Spaltgas (16) umgesetzt wird.

6. Verfahren nach Anspruch 5, **dadurch gekennzeichnet, dass** das heiß aus dem Spaltreaktor (D) strömende Spaltgas (16) zur Vorwärmung des dem Spaltreaktor (D) zugeführten Ammoniaks (15) und/oder zur Erzeugung von Dampf genutzt wird.

7. Verfahren nach einem der Ansprüche 1 bis 6, **dadurch gekennzeichnet, dass** zur Bildung der ersten Wasserstoff/Stickstoff-Fraktion (6) eine mit Hilfe eines Elektrolyseurs (E) durch die Spaltung von Wasser (1) gewonnene Wasserstofffraktion (3) eingesetzt wird.

8. Vorrichtung zur Erzeugung von Ammoniak (13), mit einer ersten Wasserstoff/Stickstoff-Quelle (W1), die eine erste Wasserstoff/Stickstoff-Fraktion (6) zur Bildung eines Ammoniaksynthesegases (8) mit zeitlich veränderlichem Mengenstrom bereitstellt, einer Ammoniaksynthese (A), dem das gebildete Ammoniaksynthesegas (8) zur Umsetzung zu Ammoniak zuführbar ist, sowie einer zweiten Wasserstoff/Stickstoff-Quelle (W2), die eine zweite Wasserstoff/Stickstoff-Fraktion (14) bereitstellen kann, um die erste Wasserstoff/Stickstoff-Fraktion (6) so zu ergänzen, dass das Ammoniaksynthesegas (8) der Ammoniaksynthese (A) im Normalbetreib stets mit einem Mengenstrom zuführbar ist, der einen vorgegebenen Mindestwert übersteigt, **dadurch gekennzeichnet, dass** sie einen mit der zweiten Wasserstoff/Stickstoff-Quelle (W2) verbundenen Speicher (Z) umfasst, in den in der Ammoniaksynthese (A) produziertes Ammoniak (10) in flüssiger Form überführbar ist, und aus dem Ammoniak (15) der zweiten Wasserstoff/Stickstoff-Quelle (W2) zugeführt werden kann, um Wasserstoff und Stickstoff zur Bildung der zweiten Wasserstoff/Stickstoff-Fraktion (14) durch die Spaltung von Ammoniak zu erhalten.

9. Vorrichtung nach Anspruch 8, **dadurch gekennzeichnet, dass** es sich bei dem mit der zweiten Wasserstoff/Stickstoff-Quelle (W2) verbundenen Speicher (Z) um einen Ammoniakspeicher, in dem als Produkt (13) abgebbares Ammoniak vor seiner weiteren Verwendung zwischengespeichert werden kann, oder um einen separaten Pufferspeicher handelt, der ausschließlich der Speicherung des Ammoniaks dient, das der zweiten Wasserstoff/Stickstoff-Quelle (W2) zuzuführen ist.

10. Vorrichtung nach Anspruch 9, **dadurch gekennzeichnet, dass** der mit der zweiten Wasserstoffquelle (W2) verbundene Speicher (Z) aus einem gegenüber Ammoniak korrosionsbeständigen Material gefertigt ist.

11. Vorrichtung nach einem der Ansprüche 8 bis 10, **dadurch gekennzeichnet, dass** die erste Wasserstoff/Stickstoff-Quelle (W1) einen Elektrolyseur (E) umfasst, mit dem Wasser (1) durch Protonen-Austausch-Membran- oder Alkali- oder Festoxid-Elektrolyse gespalten und eine wasserhaltige Wasserstofffraktion (3) erhalten werden kann.

12. Vorrichtung nach einem der Ansprüche 8 bis 11, **dadurch gekennzeichnet, dass** die zweite Wasserstoff/Stickstoff-Quelle (W2) zumindest einen Wärmetauscher umfasst, über den dem heiß aus dem Spaltreaktor (D) strömenden Spaltgas (16) Wärme zur Vorwärmung eines Einsatzstoffes, wie Ammoniak oder Brennerluft, oder zur Dampferzeugung entzogen werden kann.

13. Vorrichtung nach einem der Ansprüche 8 bis 12, **dadurch gekennzeichnet, dass** die zweite Wasserstoff/Stickstoff-Quelle (W2) einen Spaltreaktor (D) mit einem Spaltofen umfasst, der mit Katalysatormaterial gefüllte Spaltrohre aufweist, die über Brenner oder elektrisch beheizbar sind.
